# EUROPÄISCHE PATENTANMELDUNG

(11) **EP 0 878 694 A1**
(43) Veröffentlichungstag der Anmeldung: **18.11.1998**
(21) Anmeldenummer: 97810300.0
(22) Anmeldetag: 15.05.1997
(51) Int. Cl.: G01F 1/60, G01F 1/58

(54) **Verfahren zur magnetisch-induktiven Durchflussmessung und entsprechender Durchflussmesser**

(71) Anmelder: Endress + Hauser Flowtec AG, CH-4153 Reinach BL 1 (CH)
(72) Erfinder: Mesch, Franz, Prof. Dr.-Ing., D-76228 Karlsruhe (DE); Horner, Boris, D-76131 Karlsruhe (DE)
(74) Vertreter: Morstadt, Volker, Dipl.-Ing.

(57) **Zusammenfassung**

Zur Verbesserung der Meßgenauigkeit im Bereich von Meßfehlern unter 1% bei vertretbaren Kosten ohne den zur Erzeugung eines zweiten Magnetfelds erforderlichen apparativen Aufwand ist ein Verfahren zur Messung des Volumendurchflusses eines elektrisch leitfähigen Fluids mittels eines magnetisch-induktiven Durchflußmessers offenbart. Dieser enthält ein innen elektrisch isolierendes Meßrohr (1) für das Fluid und ein einziges Paar von auf einem Durchmesser (im folgenden als Magnetfeld-Durchmesser (3) bezeichnet) angeordneten Mitteln zur Erzeugung eines in dessen Richtung räumlich inhomogenen Magnetfelds mittels einer Erregerschaltung (5) zur Speisung der Mittel mit Strom (i). Ein erstes Elektrodenpaar, an dem im Betrieb eine Spannung (u₁) entsteht, ein zweites Elektrodenpaar, an dem im Betrieb eine Spannung (u₂) entsteht, und drittes Elektrodenpaar, an dem im Betrieb eine Spannung (u₃) entsteht, haben Elektroden (41, 42; 43, 44; 45, 46) mit größeren als punktförmigen, aber endlichen Flächen. Das erste Elektrodenpaar liegt auf einemDurchmesser (4₁), der mit dem Magnetfeld-Durchmesser (3) einen Winkel von 90° bildet. Das zweite Elektrodenpaar liegt auf einem Durchmesser (4₂), der mit dem Durchmesser (4₁) einen Winkel von ca. 45° bildet. Das dritte Elektrodenpaar liegt auf Durchmesser (4₃), der mit dem (4₂) einen Winkel von 90° bildet. In einer Meßschaltung zur Verarbeitung der Spannungen (u₁, u₂, u₃) werden nur ein zwischen 0,1 und 0,7 liegender Teil der Spannung (u₂) und nur derselbe Teil der Spannung (u₃) zusammen mit der Spannung (u₁) verarbeitet.

## Beschreibung

Die Erfindung betrifft magnetisch-induktive Durchflußmesser mit einem Meßrohr zur Führung eines zu messenden elektrisch leitfähigen Fluids.

In der Zeitschrift "Meas. Sci. Technol.", Bd. 7, 1996, Seiten 354 bis 357, ist ein magnetisch-induktiver Durchflußmesser beschrieben
- mit einem Meßrohr,
   -- in dem wahrend des Betriebs ein zu messendes elektrisch leitfähiges Fluid strömt,
- mit einem einzigen Paar von auf einem Durchmesser des Meßrohrs (im folgenden als Magnetfeld-Durchmesser bezeichnet) angeordneten Mitteln zur Erzeugung eines in Richtung des Magnetfeld-Durchmessers räumlich homogenen Magnetfelds,
- mit einem aus einer ersten und einer zweiten Elektrode bestehenden ersten Elektrodenpaar, an dem im Betrieb eine erste Elektrodenspannung entsteht,
- mit einem aus einer dritten und einer vierten Elektrode bestehenden zweiten Elektrodenpaar, an dem im Betrieb eine zweite Elektrodenspannung entsteht, und
- mit einem aus einer fünften und einer sechsten Elektrode bestehenden dritten Elektrodenpaar, an dem im Betrieb eine dritte Elektrodenspannung entsteht,
   -- wobei die Elektroden das Fluid berühren,
   -- wobei das erste Elektrodenpaar auf einem ersten Durchmesser des Meßrohrs (im folgenden als erster Elektroden-Durchmesser bezeichnet) angeordnet ist, der mit dem Magnetfeld-Durchmesser einen Winkel von 90° bildet,
   -- wobei das zweite Elektrodenpaar auf einem zweiten Durchmesser des Meßrohrs (im folgenden als zweiter Elektroden-Durchmesser bezeichnet) angeordnet ist, der mit dem ersten Elektroden-Durchmesser einen Winkel von 45° bildet, und
   -- wobei das dritte Elektrodenpaar auf einem dritten Durchmesser des Meßrohrs (im folgenden als dritter Elektroden-Durchmesser bezeichnet) angeordnet ist, der mit dem zweiten Elektroden-Durchmesser einen Winkel von 90° bildet, und
- mit einer Meßschaltung zur Verarbeitung der Elektrodenspannungen.

Mit dieser vorbeschriebenen Art von magnetisch-induktiven Durchflußmessern ist eine Verbesserung der Genauigkeit der Durchflußmessung gegenüber konventionellen magnetisch-induktiven Durchflußmessern auch bei rotations-unsymmetrischen Strömungsprofilen möglich.

Rotations-unsymmetrische Strömungsprofile sucht man bei konventionellen magnetisch-induktiven Durchflußmessern mit nur zwei Elektroden üblicherweise durch vorgelagerte gerade Rohrstrecken, sogenannte Einlaufstrecken, wieder rotations-symmetrisch zu machen. Die Lange der Einlaufstrecken und damit die für sie anfallenden Herstellungskosten steigen aber überproportional an, je größer die Nennweite ist. Mit der vorbeschriebenen Anordnung läßt sich die Länge der Einlaufstrecken reduzieren.

Diese Verbesserung ist aber oft noch nicht ausreichend, insb. wenn eine hohe Genauigkeit entsprechend Meßfehlern von kleiner als 1% erzielt werden soll.

Nach den Seiten 358 bis 360 loco citato läßt sich eine weitere Verbesserung der Genauigkeit gegenüber dem magnetisch-induktiven Durchflußmesser mit einem einzigen räumlich homogenen Magnetfeld mit einem dazu senkrechten zweiten räumlich homogenen Magnetfeld erreichen.

Zur weiteren Verbesserung der Meßgenauigkeit im Bereich von Meßfehlern unter 1% bei vertretbaren Kosten ohne den zur Erzeugung des zweiten Magnetfelds erforderlichen apparativen Aufwand besteht die Erfindung nach weiteren Untersuchungen der Erfinder einerseits in einem Verfahren zur Messung des Volumendurchflusses eines elektrisch leitfähigen Fluids mittels eines magnetisch-induktiven Durchflußmessers, der enthält:
- ein Meßrohr
   -- in dem das Fluid während des Betriebs strömt und
   -- das auf seiner das Fluid berührenden Innenseite elektrisch isolierend ausgebildet ist,
- ein einziges Paar von an der Mantelfläche des Meßrohrs auf einem Durchmesser des Meßrohrs (im folgenden als Magnetfeld-Durchmesser bezeichnet) angeordneten Mitteln zur Erzeugung eines in Richtung des Magnetfeld-Durchmessers räumlich inhomogenen Magnetfelds,
- ein aus einer ersten und einer zweiten Elektrode bestehendes erstes Elektrodenpaar, an dem im Betrieb eine erste Elektrodenspannung entsteht,
- ein aus einer dritten und einer vierten Elektrode bestehendes zweites Elektrodenpaar, an dem im Betrieb eine zweite Elektrodenspannung entsteht,
- ein aus einer fünften und einer sechsten Elektrode bestehendes drittes Elektrodenpaar, an dem im Betrieb eine dritte Elektrodenspannung entsteht,
   -- wobei die Elektroden eine größere als punktförmige, aber endliche Fläche haben und das Fluid berühren,
   -- wobei das erste Elektrodenpaar auf einem ersten Durchmesser des Meßrohrs (im folgenden als erster Elektroden-Durchmesser bezeichnet) angeordnet ist, der mit dem Magnetfeld-Durchmesser einen Winkel von 90° bildet,
   -- wobei das zweite Elektrodenpaar auf einem zweiten Durchmesser des Meßrohrs (im folgenden als zweiter Elektroden-Durchmesser bezeichnet) angeordnet ist, der mit dem ersten Elektroden-Durchmesser einen Winkel von ca. 45° bildet, und
   -- wobei das dritte Elektrodenpaar auf einem dritten Durchmesser des Meßrohrs (im folgenden als dritter Elektroden-Durchmesser bezeichnet) angeordnet ist, der mit dem zweiten Elektroden-Durchmesser einen Winkel von ca. 90° bildet,
- eine Erregerschaltung zur Speisung der Mittel zur Erzeugung des Magnetfelds mit Strom und
- eine Meßschaltung zur Verarbeitung von an den Elektroden entstehenden Spannungen,
bei welchem Verfahren
- nur ein zwischen 0,1 und 0,7 liegender Teil der zweiten Elektrodenspannung durch die Meßschaltung zusammen mit der ersten Elektrodenspannung verarbeitet wird und
- durch die Meßschaltung zusammen mit der ersten Elektrodenspannung von der dritten Elektrodenspannung nur derselbe Teil wie der zwischen 0,1 und 0,7 liegende Teil verarbeitet wird.

Zur weiteren Verbesserung der Meßgenauigkeit im Bereich von Meßfehlern unter 1% bei vertretbaren Kosten ohne den zur Erzeugung des zweiten Magnetfelds erforderlichen apparativen Aufwand besteht die Erfindung nach weiteren Untersuchungen der Erfinder andererseits in einem magnetisch-induktiven Durchflußmesser
- mit einem Meßrohr,
   -- in dem während des Betriebs ein zu messendes elektrisch leitfähiges Fluid strömt und
   -- das auf seiner das Fluid berührenden Innenseite elektrisch isolierend ausgebildet ist,
- mit einem einzigen Paar von an der Mantelfläche des Meßrohrs auf einem Durchmesser des Meßrohrs (im folgenden als Magnetfeld-Durchmesser bezeichnet) angeordneten Mitteln zur Erzeugung eines in Richtung des Magnetfeld-Durchmessers inhomogenen Magnetfelds,
- mit einem aus einer ersten und einer zweiten Elektrode bestehenden ersten Elektrodenpaar, an dem im Betrieb eine erste Elektrodenspannung entsteht,
- mit einem aus einer dritten und einer vierten Elektrode bestehenden zweiten Elektrodenpaar, an dem im Betrieb eine zweite Elektrodenspannung entsteht,
- mit einem aus einer fünften und einer sechsten Elektrode bestehenden dritten Elektrodenpaar, an dem im Betrieb eine dritte Elektrodenspannung entsteht,
   -- wobei die Elektroden eine größere als punktförmige, aber endliche Fläche haben und das Fluid berühren,
   -- wobei das erste Elektrodenpaar auf einem ersten Durchmesser des Meßrohrs (im folgenden als erster Elektroden-Durchmesser bezeichnet) angeordnet ist, der mit dem Magnetfeld-Durchmesser einen Winkel von 90° bildet,
   -- wobei das zweite Elektrodenpaar auf einem zweiten Durchmesser des Meßrohrs (im folgenden als zweiter Elektroden-Durchmesser bezeichnet) angeordnet ist, der mit dem ersten Elektroden-Durchmesser einen Winkel von ca. 45° bildet, und
   -- wobei das dritte Elektrodenpaar auf einem dritten Durchmesser des Meßrohrs (im folgenden als dritter Elektroden-Durchmesser bezeichnet) angeordnet ist, der mit dem zweiten Elektroden-Durchmesser einen Winkel von ca. 90° bildet,
- mit einer Erregerschaltung zur Speisung der Mittel zur Erzeugung des Magnetfelds mit Strom und - mit einer Meßschaltung zur Verarbeitung der Elektrodenspannungen, die umfaßt:
   -- eine Summierstufe mit einem ersten, einem zweiten und einem dritten Eingang,
   -- eine erste Multiplizierstufe mit einem ersten und einem zweiten Eingang sowie einem Ausgang,
   -- eine zweite Multiplizierstufe mit einem ersten und einem zweiten Eingang sowie einem Ausgang,
   -- bei welcher Meßschaltung
      --- die erste Elektrodenspannung mit dem ersten Eingang der Summierstufe gekoppelt ist,
      --- die zweite Elektrodenspannung mit dem ersten Eingang der ersten Multiplizierstufe gekoppelt ist,
      --- die dritte Elektrodenspannung mit dem ersten Eingang der zweiten Multiplizierstufe gekoppelt ist,
      --- dem zweiten Eingang der ersten Multiplizierstufe und dem zweiten Eingang der zweiten Multiplizierstufe ein einen Multiplizierfaktor f repräsentierendes Multipliziersignal (F) zugeführt ist, der zwischen 0,1 und 0,7 liegt, und
      --- der Ausgang der Summierstufe ein dem Volumendurchfluß proportionales Signal liefert.

Nach einer bevorzugten Ausgestaltung der zweiten Variante der Erfindung ist die Meßschaltung dadurch realisiert,
- daß die erste Elektrodenspannung eingangsseitig einem ersten Entkoppelverstärker mit einem Ausgang zugeführt ist,
- daß die zweite Elektrodenspannung eingangsseitig einem zweiten Entkoppelverstärker mit einem Ausgang zugeführt ist,
- daß die dritte Elektrodenspannung eingangsseitig einem dritten Entkoppelverstärker mit einem Ausgang zugeführt ist,
   -- welche Entkoppelverstärker denselben Verstärkungsfaktor haben,
- daß der Ausgang des ersten Entkoppelverstärkers über einen einen Widerstandswert R aufweisenden ersten Widerstand an einem invertierenden Eingang eines Differenzverstärkers liegt,
   -- von dem ein nichtinvertierender Eingang an einem Schaltungsnullpunkt angeschlossen ist und
   -- von dem ein Ausgang über einen den Widerstandswert R aufweisenden zweiten Widerstand am invertierenden Eingang liegt und das dem Volumendurchfluß proportionale Signal liefert,
- daß der Ausgang des zweiten Entkoppelverstärkers über einen einen Widerstandswert R/f aufweisenden dritten Widerstand am invertierenden Eingang des Differenzverstärkers liegt und
- daß der Ausgang des dritten Entkoppelverstärkers über einen den Widerstandswert R/f aufweisenden vierten Widerstand am invertierenden Eingang des Differenzverstärkers liegt.

Das Überraschende an der Erfindung ist, daß, obwohl die zweite Elektrodenspannung und die dritte Elektrodenspannung wegen des Winkels von ca. +45° bzw. ca. -45°, unter dem der zweite Elektroden-Durchmesser bzw. der dritte Elektroden-Durchmesser die Richtung des einzigen Magnetfelds schneidet, schon kleiner als die erste Elektrodenspannung sind, eine weitere Reduzierung der zweiten und der dritten Elektrodenspannung auf das 0,1-fache bis 0,7-fache erforderlich ist, um die oben erwähnte Aufgabe zu lösen.

Ein Vorteil der Erfindung besteht darin, daß die Meßgenauigkeit bei rotations-unsymmetrischen Strömungsprofilen und bei räumlich inhomogenen Magnetfeldern, wie sie in der Praxis fast immer vorkommen, verbessert wird. Solche rotations-unsymmetrischen Strömungsprofile treten z.B. hinter Blenden, Ventilen, Hähnen, Schiebern oder Krümmern in Rohrleitungen auf. Bei der Erfindung können daher die erwähnten Einlaufstrecken wesentlich verkürzt, wenn nicht sogar ganz weggelassen werden.

Die Erfindung wird nun anhand von in den Figuren der Zeichnung dargestellten Ausführungsbeispielen näher erläutert.
- Fig. 1 zeigt: schematisch im Querschnitt den konstruktiven Aufbau eines Meßwertaufnehmers eines magnetisch-induktiven Durchflußmessers,
- Fig. 2 zeigt: nach Art eines Blockschaltbilds im Prinzip eine bei der Erfindung angewendete Meßschaltung,
- Fig. 3 zeigt: nach Art eines Blockschaltbilds eine bevorzugte Realisierung der Meßschaltung von Fig. 2, und
- Fig. 4 zeigt: nach Art eines Blockschaltbilds eine bevorzugte Weiterbildung der Meßschaltung von Fig. 2.

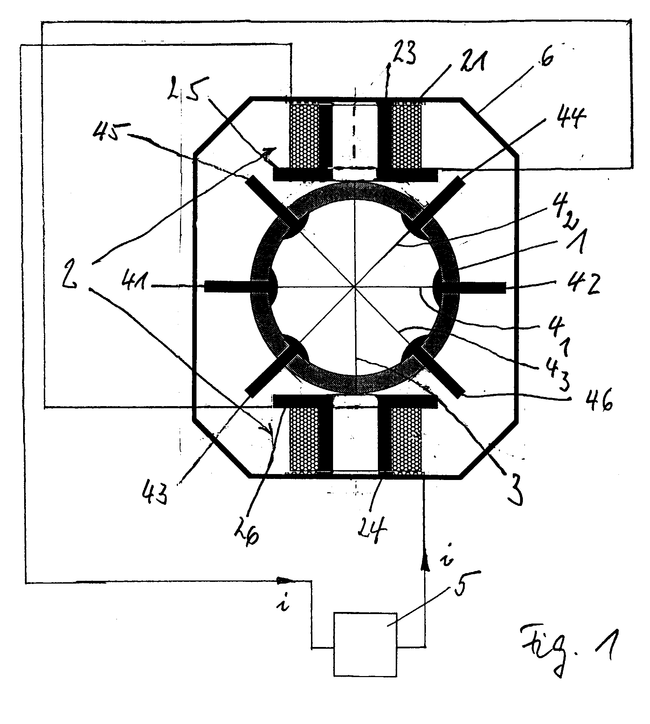

In Fig. 1 sind stark schematisiert die für die Funktion wichtigen Einzelteile eines Meßwertaufnehmers eines magnetisch-induktiven Durchflußmessers gezeigt. Es handelt sich hierbei zunächst um ein Meßrohr 1 zur Führung eines zu messenden elektrisch leitfähigen Fluids.

Dieses Meßrohr 1 ist auf seiner das Fluid berührenden Innenseite elektrisch isolierend ausgebildet, und zwar einerseits z.B. dadurch, daß das Meßrohr 1 selbst vollständig aus einem Isolierstoff, insb. aus gesinterter Keramik, bevorzugt aus Aluminiumoxid-Keramik, oder aus einem Kunststoff, bevorzugt Hartgummi, besteht.

Andererseits kann das Meßrohr 1 auch dadurch relisiert sein, daß ein nicht-ferromagnetisches Metallrohr, insb. ein rostfreies Stahlrohr, innen mit einer Isolierschicht aus einem geeigneten Kunststoff, insb. aus Hartgummi, Weichgummi oder Polyfluorethylen, bevorzugt Polytetrafluorethylen, beschichtet ist. In diese Beschichtung können auch mechanische Verstärkungsmittel, wie z.B. Metallgitter, eingebettet sein.

An der äußeren Mantelfläche des Meßrohrs 1 ist ein einziges Paar 2 von auf einem Durchmesser des Meßrohrs 1 liegenden Mitteln zur Erzeugung eines in Richtung des Durchmessers verlaufenden Magnetfelds angeordnet; dieses Magnetfeld ist räumlich inhomogen.

Die Mittel zur Erzeugung des Magnetfelds umfassen ein einziges Spulenpaar aus einer ersten Spule 21 und einer zweiten Spule 22, ein einziges Spulenkernpaar aus einem ersten Spulenkern 23 und einem zweiten Spulenkern 24, ein Polschuhpaar aus einem ersten Polschuh 25 und einem zweiten Polschuh 26 sowie eine der Speisung der Spulen 21, 22 mit einem Strom i dienende Erregerschaltung 5. Die Spulen 21, 22 sind gleichsinnig in Serie geschaltet.

Die Polschuhe 25, 26 sind ebene weichmagnetische Bleche mit einer zentralen Bohrung und die Spulenkerne 23, 24 weichmagnetische Hülsenb, so daß im Bedarfsfall pro Polschuh eine weitere Elektrode im Meßrohr 1 angeordnet werden kann.

Wenn die in Fig. 1 dargestellte Lage die Einbaulage des magnetisch-induktiven Durchflußmessers ist, dient eine in der Bohrung des Polschuhs 26 angeordnete weitere Elektrode zur Verbindung mit einem Schaltungsnullpunkt.

Wenn wiederum die in Fig. 1 dargestellte Lage die Einbaulage des magnetisch-induktiven Durchflußmessers ist, kann eine in der Bohrung des Polschuhs 25 angeordnete weitere Elektrode zur Überwachung dienen, ob das Meßrohr 1 vollständig mit dem zu messenden Fluid gefüllt ist.

Der Strom i kann einen der bei magnetisch-induktiven Durchflußmessern üblichen Verläufe haben; der Strom i kann also z.B. ein bipolarer Gleichstrom bzw. ein pulsierender oder ein kontinuierlicher Wechselstrom sein.

Als Schaltungen zur Erzeugung der eben erwähnten Gleichströme oder Wechselströme sind die bei magnetisch-induktiven Durchflußmessern üblichen und im Stand der Technik beschriebenen Schaltungen geeignet, so daß auf die Erläuterung von deren Einzelheiten hier verzichtet werden kann.

Das Spulenpaar, das Spulenkernpaar und das Polschuhpaar haben dieselbe Achse, die zugleich ein Durchmesser des Meßrohrs 1 ist. Dieser Durchmesser ist im folgenden als Magnetfeld-Durchmesser 3 bezeichnet.

Wie bei magnetisch-induktiven Durchflußmessern üblich, können die Spulenkerne 23, 24 entweder ferromagnetisch - wie bei den Ausführungsbeispielen vorausgesetzt - oder nicht-ferromagnetisch sein. Der magnetische Kreis ist durch ein entsprechendes Rückschlußblech 6 geschlossen.

Am und im Meßrohr 1 sind ferner ein erstes Elektrodenpaar mit einer ersten und einer zweiten Elektrode 41, 42, ein zweites Elektrodenpaar mit einer dritten und einer vierten Elektrode 43, 44 sowie ein drittes Elektrodenpaar mit einer fünften und einer sechsten Elektrode 45, 46 angeordnet. Jede Elektrode hat eine größere als punktförmige Fläche, berührt das Fluid und ist in der Wand des Meßrohrs 1 fluiddicht fixiert.

Die beiden Elektroden 41, 42 des ersten Elektrodenpaars sind auf einem Durchmesser des Meßrohrs 1 angeordnet, der im folgenden als erster Elektroden-Durchmesser 4₁ bezeichnet ist. Die beiden Elektroden 43, 44 des zweiten Elektrodenpaars sind auf einem Durchmesser des Meßrohrs 1 angeordnet, der im folgenden als zweiter Elektroden-Durchmesser 4₂ bezeichnet ist. Die beiden Elektroden 45, 46 des dritten Elektrodenpaars sind auf einem Durchmesser des Meßrohrs 1 angeordnet, der im folgenden als dritter Elektroden-Durchmesser 4₃ bezeichnet ist.

Der erste Elektroden-Durchmesser 4₁ bildet mit dem Magnetfeld-Durchmesser 3 einen Winkel von 90°. Der zweite Elektroden-Durchmesser 4₂ bildet mit dem ersten Elektroden-Durchmesser 4₁ einen Winkel von 45° und mit dem dritten Elektroden-Durchmesser 4₃ einen Winkel von 90°. Die beiden letzteren Winkel brauchen nicht exakt eingehalten zu werden und können z.B. um ca. 10% davon abweichen. Dann ist der für genau 45° bzw. genau 90° geltende Wert des unten näher erläuterten Multiplizierfaktors f geringfügig abweichend davon zu wählen.

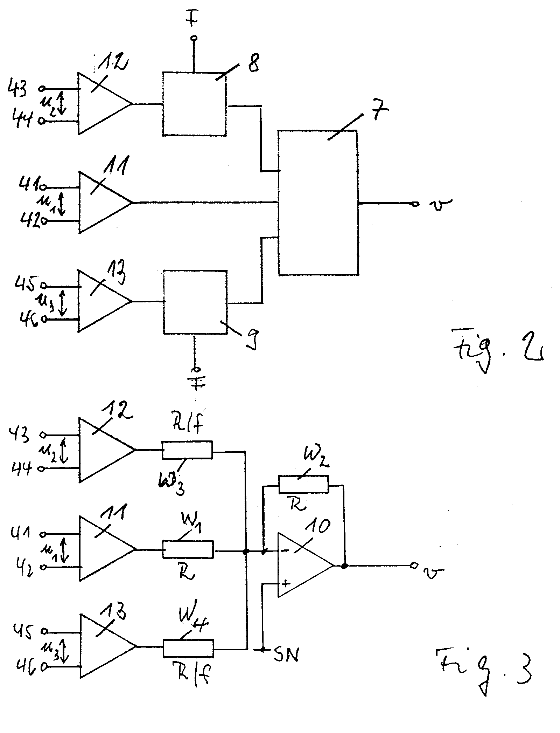

In Fig. 2 ist das Prinzip einer bei der Erfindung angewendeten Meßschaltung blockschaltbildartig dargestellt, die der Verarbeitung der Elektrodenspannungen u₁, u₂, u₃ dient.

Die erste Elektrodenspannung u₁ ist eingangsseitig einem ersten Entkoppelverstärker 11 zugeführt, d.h. ein erster Eingang ist mit der ersten Elektrode 41 und ein zweiter Eingang mit der zweiten Elektrode 42 verbunden.

Die zweite Elektrodenspannung u₂ ist eingangsseitig einem zweiten Entkoppelverstärker 12 zugeführt, d.h. ein erster Eingang ist mit der dritten Elektrode 43 und ein zweiter Eingang mit der vierten Elektrode 44 verbunden.

Die dritte Elektrodenspannung u₃ ist eingangsseitig einem dritten Entkoppelverstärker 13 zugeführt, d.h. ein erster Eingang ist mit der fünften Elektrode 45 und ein zweiter Eingang mit der sechsten Elektrode 46 verbunden.

Ein erster Eingang einer ersten Multiplizierstufe 8 liegt an einem Ausgang des zweiten Entkoppelverstärkers 12. Einem zweiten Eingang der ersten Multiplizierstufe 8 ist ein einen Multiplizierfaktor f repräsentierendes Multipliziersignal F zugeführt; der Multiplizierfaktor f liegt zwischen 0,1 und 0,7.

Ein erster Eingang einer Summierstufe 7 ist mit einem Ausgang des ersten Entkoppelverstärkers 11, ein zweiter Eingang der Summierstufe 7 ist mit einem Ausgang der ersten Multiplizierstufe 8 und ein dritter Eingang der Summierstufe 7 ist mit einem Ausgang der zweiten Multiplizierstufe 9 verbunden.

Die drei Entkoppelverstärker 11, 12, 13 haben denselben Verstärkungsfaktor, sind also möglichst identisch zueinander aufgebaut. Ein Ausgang der Summierstufe 7 liefert ein dem Volumendurchfluß proportionales Signal v.

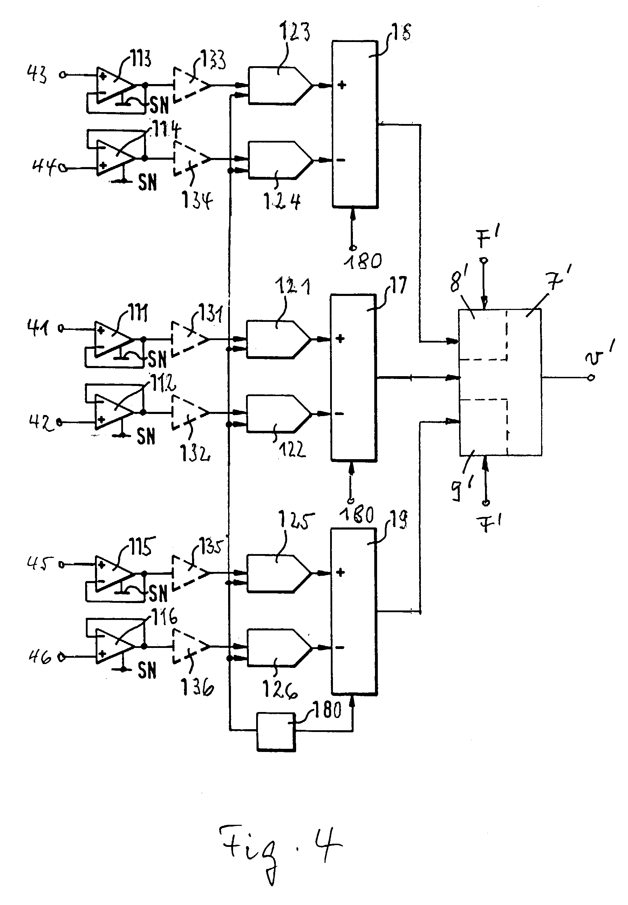

Die Fig. 3 zeigt blockschaltbild-artig eine bevorzugte Realisierung der Meßschaltung, wobei wieder die drei möglichst identischen Entkoppelverstärker 11, 12, 13 vorgesehen sind.

Der Ausgang des ersten Entkoppelverstärkers 11 liegt über einen einen Widerstandswert R aufweisenden ersten Widerstand W₁ an einem invertierenden Eingang eines Differenzverstärkers 10, von dem ein nichtinvertierender Eingang an einem Schaltungsnullpunkt SN angeschlossen ist. Ein Ausgang des Differenzverstärkers 10 liegt über einen den Widerstandswert R aufweisenden zweiten Widerstand W₂ an seinem invertierenden Eingang und liefert das dem Volumendurchfluß proportionale Signal.

Der Ausgang des zweiten Entkoppelverstärkers 12 liegt über einen einen Widerstandswert R/f aufweisenden dritten Widerstand W₃ und der Ausgang des dritten Entkoppelverstärkers 13 über einen den Widerstandswert R/f aufweisenden vierten Widerstand am invertierenden Eingang des Differenzverstärkers 10. Der Widerstandswert R/f ist somit mit dem Reziprokwert von f multipliziert.

Im Ausführungsbeispiel der Fig. 3 korrespondiert der invertierende Eingang des Differenzverstärkers 10 mit der Summierstufe von Fig. 2, die also hier lediglich ein Summier-Verbindungspunkt ist.

Die Erläuterungen der Fig. 2 und 3 setzen voraus, daß die Elektrodenspannungen u₁, u₂, u₃, da sie analoge Spannungen sind, auch analog weiterverarbeitet werden; deshalb sind die Teilschaltungen 8, 9, 10 , 11, 12, 13 Analog-Schaltungen. Dies ist jedoch nicht zwingend; auch eine digitale Weiterverarbeitung der Elektrodenspannungen u₁, u₂, u₃ ist möglich.

Hierzu zeigt die Fig. 4 nach Art eines Blockschaltbilds eine bevorzugte Weiterbildung der Meßschaltung von Fig. 2. Dieser Weiterbildung liegt als Prinzip zugrunde, daß ein eigener Entkoppelverstärker 111, 112, 113, 114, 115, 116 der entsprechenden Elektrode 41, 42, 43, 44, 45, 46 zugeordnet ist. Sofort anschließend werden die Ausgangssignale dieser Entkoppelverstärker analog/digital-gewandelt, und erst die Digitalsignale werden entsprechend dem bisher erläuterten Grundprinzip der Erfindung - nun aber digital - weiterverarbeitet.

Die Entkoppelverstärker 111, 112, 113, 114, 115, 116 sind Operationsverstärker, deren jeweiliger nichtinvertierender Eingang mit der entsprechenden Elektrode 41, 42, 43, 44, 45, 46 verbunden ist, während der jeweilige invertierende Eingang am Schaltungsnullpunkt SN angeschlossen ist. Die Entkoppelverstärker 111, 112, 113, 114, 115, 116 haben denselben Verstärkungsfaktor, sind also möglichst identisch zueinander aufgebaut.

Jedem Entkoppelverstärker 111, 112, 113, 114, 115, 116 ist ein Analog/Digital-Wandler 121, 122, 123, 124, 125, 126 nachgeschaltet, dessen Signal-Eingang mit dem Ausgang des entsprechenden Entkoppelverstärkers verbunden ist, gegebenenfalls unter Zwischenschaltung eines jeweiligen Verstärkers 131, 133, 133, 134, 135, 136, wie gestrichelt angedeutet ist.

Ein erster Subtrahierer 17 ist dem jeweiligen Ausgang der Analog/Digital-Wandler 121, 122 nachgeschaltet. Somit ist z.B. der Minuend-Eingang des Subtrahierers 17 mit dem Ausgang des Analog/Digital-Wandlers 121 und dessen Subtrahend-Eingang mit dem Ausgang des Analog/Digital-Wandlers 122 verbunden.

Ein zweiter Subtrahierer 18 ist dem jeweiligen Ausgang der Analog/Digital-Wandler 123, 124 nachgeschaltet. Somit ist z.B. der Minuend-Eingang des Subtrahierers 18 mit dem Ausgang des Analog/Digital-Wandlers 123 und dessen Subtrahend-Eingang mit dem Ausgang des Analog/Digital-Wandlers 124 verbunden.

Ein dritter Subtrahierer 19 ist dem jeweiligen Ausgang der Analog/Digital-Wandler 125, 126 nachgeschaltet. Somit ist z.B. der Minuend-Eingang des Subtrahierers 19 mit dem Ausgang des Analog/Digital-Wandlers 125 und dessen Subtrahend-Eingang mit dem Ausgang des Analog/Digital-Wandlers 126 verbunden.

Ein Taktgenerator 180 speist die Analog/Digital-Wandler 121, 122, 123, 124, 125, 126 mit einem Abtastsignal, dessen Frequenz größer als ca. 1 kHz ist; bevorzugt liegt diese Frequenz in der Größenordnung von 10 kHz, also zwischen 5 kHz und 50 kHz. Ferner speist der Taktgenerator 180 die Subtrahierer 17, 18, 19 mit einem Taktsignal geeigneter Frequenz, die gleich der Frequenz des die Analog/Digital-Wandler steuernden Taktsignals sein kann.

Ein erster Eingang eines ersten Multiplizierers 8' liegt an einem Ausgang des Subtrahieres 18. Ein den ersten Multiplizierfaktor f repräsentierendes Digital-Multipliziersignal F' ist einem zweiten Eingang des Multiplizierers 8' zugeführt.

Ein erster Eingang eines zweiten Multiplizierers 9' liegt an einem Ausgang des Subtrahieres 19. Das den ersten Multiplizierfaktor f repräsentierende Digital-Multipliziersignal F' ist einem zweiten Eingang des Multiplizierers 9' zugeführt.

Ein erster Eingang eines Summierers 7' ist mit einem Ausgang des Subtrahieres 17, ein zweiter Eingang des Summierers 7' ist mit einem Ausgang des ersten Multiplizierers 8' und ein dritter Eingang des Summierers 7' ist mit einem Ausgang des zweiten Multiplizierers 9' verbunden. Ein Ausgang des Summierers 7' liefert ein dem Volumendurchfluß proportionales Digital-Signal v'.

Aus Vereinfachungsgründen sind in Fig. 4 die Multiplizierer 8', 9' als Teilschaltungen des Summierers 7' dargestellt; dies erscheint ohne weiteres zulässig, da die Funktionen Summieren und Multiplizieren üblicherweise mittels Digitalprozessoren, insb. Mikroprozessoren, realisiert sind.

Das oben erwähnte Signal v bzw. v' kann mittels eines Displays oder in anderer geeigneter Weise, z.B. mittels eines Kurvenschreibers, visualisiert werden. Das Signal v bzw. v' kann aber auch allein oder zusätzlich zu dieser Visualisierung in eine umfangreichere Meßwert-Verarbeitung einbezogen werden.

Bei einem realisierten magnetisch-induktiven Durchflußmesser, der eine Meßrohr-Nennweite von 50 mm und einen Aufbau hatte, der dem Querschnitt von Fig. 1 in etwa maßstäblich entsprach, hatte der Multiplizierfaktor f einen Wert von 0,3. Für Nennweiten bis zu 100 mm und mit Fig. 1 vergleichbaren Aufbauten der Mittel zur Erzeugung des Magnetfelds gilt ebenfalls ein Wert von 0,3.

Bei größeren Nennweiten als 100 mm sind die Abmessungen der Mittel zur Erzeugung des Magnetfelds im Verhältnis zur Nennweite kompakter, als in Fig. 1 dargestellt ist, und der Multiplizierfaktor f hat Werte zwischen 0,35 und 0,7.

## Patentansprüche

1. Verfahren zur Messung des Volumendurchflusses eines elektrisch leitfähigen Fluids mittels eines magnetisch-induktiven Durchflußmessers, der enthält:
- ein Meßrohr (1),
-- in dem das Fluid während des Betriebs strömt und
-- das auf seiner das Fluid berührenden Innenseite elektrisch isolierend ausgebildet ist,
- ein einziges Paar von an der Mantelfläche des Meßrohrs auf einem Durchmesser des Meßrohrs (im folgenden als Magnetfeld-Durchmesser (3) bezeichnet) angeordneten Mitteln zur Erzeugung eines in Richtung des Magnetfeld-Durchmessers räumlich inhomogenen Magnetfelds,
- ein aus einer ersten und einer zweiten Elektrode (21, 22) bestehendes erstes Elektrodenpaar, an dem im Betrieb eine erste Elektrodenspannung (u₁) entsteht,
- ein aus einer dritten und einer vierten Elektrode (23, 24) bestehendes zweites Elektrodenpaar, an dem im Betrieb eine zweite Elektrodenspannung (u₂) entsteht,
- ein aus einer fünften und einer sechsten Elektrode (25, 26) bestehendes drittes Elektrodenpaar, an dem im Betrieb eine dritte Elektrodenspannung (u₃) entsteht,
-- wobei die Elektroden eine größere als punktförmige, aber endliche Fläche haben und das Fluid berühren,
-- wobei das erste Elektrodenpaar auf einem ersten Durchmesser des Meßrohrs (im folgenden als erster Elektroden-Durchmesser (4₁) bezeichnet) angeordnet ist, der mit dem Magnetfeld-Durchmesser (3) einen Winkel von 90° bildet,
-- wobei das zweite Elektrodenpaar auf einem zweiten Durchmesser des Meßrohrs (im folgenden als zweiter Elektroden-Durchmesser (4₂) bezeichnet) angeordnet ist, der mit dem ersten Elektroden-Durchmesser (4₁) einen Winkel von ca. 45° bildet, und
-- wobei das dritte Elektrodenpaar auf einem dritten Durchmesser des Meßrohrs (im folgenden als dritter Elektroden-Durchmesser (4₃) bezeichnet) angeordnet ist, der mit dem zweiten Elektroden-Durchmesser (4₂) einen Winkel von ca. 90° bildet,
- eine Erregerschaltung (5) zur Speisung der Mittel zur Erzeugung des Magnetfelds mit Strom (i) und
- eine Meßschaltung zur Verarbeitung der Elektrodenspannungen (u₁, u₂, u₃),
bei welchem Verfahren
- nur ein zwischen 0,1 und 0,7 liegender Teil der zweiten Elektrodenspannung (u₂) durch die Meßschaltung zusammen mit der ersten Elektrodenspannung (u₁) verarbeitet wird und
- nur derselbe Teil wie der zwischen 0,1 und 0,7 liegende Teil der dritten Elektrodenspannung (u₂) durch die Meßschaltung zusammen mit der ersten Elektrodenspannung (u₁) verarbeitet wird.

2. Magnetisch-induktiver Durchflußmesser
- mit einem Meßrohr (1),
-- in dem das Fluid während des Betriebs strömt und
-- das auf seiner das Fluid berührenden Innenseite elektrisch isolierend ausgebildet ist,
- mit einem einzigen Paar von an der Mantelfläche des Meßrohrs auf einem Durchmesser des Meßrohrs (im folgenden als Magnetfeld-Durchmesser (3) bezeichnet) angeordneten Mitteln zur Erzeugung eines in Richtung des Magnetfeld-Durchmessers räumlich inhomogenen Magnetfelds,
- mit einem aus einer ersten und einer zweiten Elektrode (21, 22) bestehenden ersten Elektrodenpaar, an dem im Betrieb eine erste Elektrodenspannung (u₁) entsteht,
- mit einem aus einer dritten und einer vierten Elektrode (23, 24) bestehenden zweiten Elektrodenpaar, an dem im Betrieb eine zweite Elektrodenspannung (u₂) entsteht,
- mit einem aus einer fünften und einer sechsten Elektrode (25, 26) bestehenden dritten Elektrodenpaar, an dem im Betrieb eine dritte Elektrodenspannung (u₃) entsteht,
-- wobei die Elektroden eine größere als punktförmige, aber endliche Fläche haben und das Fluid berühren,
-- wobei das erste Elektrodenpaar auf einem ersten Durchmesser des Meßrohrs (im folgenden als erster Elektroden-Durchmesser (4₁) bezeichnet) angeordnet ist, der mit dem Magnetfeld-Durchmesser (3) einen Winkel von 90° bildet,
-- wobei das zweite Elektrodenpaar auf einem zweiten Durchmesser des Meßrohrs (im folgenden als zweiter Elektroden-Durchmesser (4₂) bezeichnet) Elektroden-Durchmesser angeordnet ist, der mit dem ersten Elektroden-Durchmesser (4₁) einen Winkel von ca. 45° bildet, und
-- wobei das dritte Elektrodenpaar auf einem dritten Durchmesser des Meßrohrs (im folgenden als dritter Elektroden-Durchmesser (4₃) bezeichnet) angeordnet ist, der mit dem zweiten Elektroden-Durchmesser (4₂) einen Winkel von ca. 90° bildet,
- mit einer Erregerschaltung (5) zur Speisung der Mittel zur Erzeugung des Magnetfelds mit Strom (i) und
- mit einer Meßschaltung zur Verarbeitung der Elektrodenspannungen (u₁, u₂, u₃), die umfaßt:
-- eine Summierstufe (7) mit einem ersten, einem zweiten und einem dritten Eingang,
-- eine erste Multiplizierstufe (8) mit einem ersten und einem zweiten Eingang sowie einem Ausgang,
-- eine zweite Multiplizierstufe (9) mit einem ersten und einem zweiten Eingang sowie einem Ausgang,
-- bei welcher Meßschaltung
--- die erste Elektrodenspannung (u₁) mit dem ersten Eingang der Summierstufe gekoppelt ist,
--- die zweite Elektrodenspannung (u₂) mit dem ersten Eingang der ersten Multiplizierstufe gekoppelt ist,
--- die dritte Elektrodenspannung (u₃) mit dem ersten Eingang der zweiten Multiplizierstufe gekoppelt ist,
--- dem zweiten Eingang der ersten Multiplizierstufe und dem zweiten Eingang der zweiten Multiplizierstufe ein einen Multiplizierfaktor f repräsentierendes Multipliziersignal (F) zugeführt ist, der zwischen 0,1 und 0,7 liegt, und
--- der Ausgang der Summierstufe ein dem Volumendurchfluß proportionales Signal (v) liefert.

3. Magnetisch-induktiver Durchflußmesser nach Anspruch 2, bei dem die Meßschaltung dadurch realisiert ist,
- daß die erste Elektrodenspannung (u₁) eingangsseitig einem ersten Entkoppelverstärker (11) mit einem Ausgang zugeführt ist,
- daß die zweite Elektrodenspannung (u₂) eingangsseitig einem zweiten Entkoppelverstärker (12) mit einem Ausgang zugeführt ist,
- daß die dritte Elektrodenspannung (u₃) eingangsseitig einem dritten Entkoppelverstärker (13) mit einem Ausgang zugeführt ist,
-- welche Entkoppelverstärker denselben Verstärkungsfaktor haben,
- daß der Ausgang des ersten Entkoppelverstärkers über einen einen Widerstandswert R aufweisenden ersten Widerstand (W₁) an einem invertierenden Eingang eines Differenzverstärkers (10) liegt,
-- von dem ein nichtinvertierender Eingang an einem Schaltungsnullpunkt (SN) angeschlossen ist und
-- von dem ein Ausgang über einen den Widerstandswert R aufweisenden zweiten Widerstand (W₂) am invertierenden Eingang liegt und das dem Volumendurchfluß proportionale Signal (v) liefert,
- daß der Ausgang des zweiten Entkoppelverstärkers über einen einen Widerstandswert R/f aufweisenden dritten Widerstand (W₃) am invertierenden Eingang des Differenzverstärkers liegt und
- daß der Ausgang des dritten Entkoppelverstärkers über einen den Widerstandswert R/f aufweisenden vierten Widerstand (W₄) am invertierenden Eingang des Differenzverstärkers liegt.
